# EUROPEAN PATENT APPLICATION

(11) **EP 2 548 844 A1**
(43) Date of publication of application: **23.01.2013**
(21) Application number: 11755655.5
(22) Date of filing: 14.03.2011
(51) Int. Cl.: C01B 33/037

(54) **METHOD FOR PURIFYING SILICON**

(30) Priority: 19.03.2010 CN 201010129540
(71) Applicant: Intiraymi Silicon Technologies Ltd, Beijing 100190 (CN)
(72) Inventor: JIANG, Xuezhao, Beijing 100190 (CN)
(74) Representative: Grünecker, Kinkeldey, Stockmair & Schwanhäusser
(86) International application number: PCT/CN2011/071767
(87) International publication number: WO 2011/113338

(57) **Abstract**

Disclosed is a method for purifying silicon, which comprises the steps as follows: aluminum-silicon alloy, made from high purity aluminum and silicon to be purified, and silicon to be purified are in close contact and placed in a closed environment to be subjected to heating under vacuum, so that aluminum-silicon alloy ingot is melted into aluminum-silicon melt; the temperatures are kept constant when the temperature at the interface of aluminum-silicon melt and silicon to be purified and the temperature at free end of aluminum-silicon melt reach 900°C and 800°C respectively, so that the purified silicon is segregated at the left interface; as the purified silicon begins to segregate, the heating apparatus is moved in step with the growth rate of the segregated silicon toward the silicon to be purified in order to maintain the temperatures at both ends of aluminum-silicon melt; the segregated pure silicon is cut off upon the completion of dissolution of purified silicon and after cooling and air pressure recovery. Boron, phosphorus and other impurities in the silicon with the purity of 4N or 5N can be removed simultaneously and effectively by the purification method, so that the purity of silicon can be further improved to meet the needs of solar cell for high purity silicon in an even stable manner.

## Description

### Technical Field

The present invention relates to a method for manufacturing high-purity silicon. The manufactured silicon is used for solar cells.

### Background Art

Photovoltaic power generation is a technology converting light power directly into electrical power by using the photovoltaic effect of semiconductor interfaces. The key components of this technology are solar cells, and one of the key factors manufacturing solar cells is the preparation of high purity silicon.

In order to lower the cost of the photovoltaic power generation and promote the transformation of the photovoltaic power generation into a principal energy, it is a strategic measure to avoid the modified Siemens process in the prior art which is high-cost, high-energy-consumption and environmental burden, and to seek new purification methods for manufacturing high purity silicon used in solar cells which are low-cost, low-energy-consumption and environment-friendly.

Generally, the metallurgy method (physical method) which has achieved initial success is the combination of two types of purification processes. The first type, the basic processes included in the physic method, are the directional solidification and the zone-melting which are able to remove the majority of impurities from silicon and enhance the overall purity of silicon. The second type is a purification process specially for electrically active impurities in silicon such as boron and phosphor which are difficult to be removed by the first type. The combination of these two types has produced high purity silicon which can be used in the preparation of solar cells. The actual result shows that the prepared solar cells have the defects: the photoelectric conversion efficiency is insufficiently high and deteriorates rapidly. This shows that the content of impurities in the high purity silicon prepared by the prior art methods is still unstable and the purity of silicon needs to be further improved. Therefore, the metallurgy method in prior art is still unable to meet the requirement of solar cells.

The methods in the prior art for removing boron and phosphor include: acid cleaning, oxidation, high-temperature vacuum evaporation (more than 1500°C), and the directional solidification. Acid cleaning, oxidation and vacuum evaporation can only be conducted on the surfaces of the solid silicon and melting silicon. The continuation of the reaction depends on the concentration diffusion of boron atoms and phosphorus atoms which have low (ppm) concentration inside silicon and the effect of a single operation is limited. The process of high-temperature evaporation also results in the pollution of silicon by environment. The segregation coefficient of boron and phosphor is so big that the purification result of a single directional solidification is not good. Besides, among the methods of prior art for removing boron and phosphor, there is not one method with which two said impurities can be removed at the same time.

### Summary of the invention

The main object of the present invention is to provide a new method for the purification of silicon, which is able to remove effectively the harmful impurities: boron and phosphor at the same time, to lower the contents of other impurities inside silicon at the same time, and to further increase the purity of silicon with the purity 4N (namely, the purity is 99.99%, similarly hereinafter) or 5N (namely, the purity is 99.999%, similarly hereafter) in order to further meet the requirements of solar cells for high-purity silicon.

The present invention employs the following technical solutions to achieve the said object.

A method for the purification of silicon, comprises the steps of:
(1)Place the aluminum-silicon alloy made from aluminum with the purity 4N or 5N and silicon with the purity 4N or 5N and silicon to be purified in the closed environment in close contact and vacuum pumping, heat when air pressure is below 10⁻²Pa, and the aluminum-silicon alloy melts to form the aluminum-silicon melt;
(2)Control the heating apparatus to make the interface temperature of the aluminum-silicon melt and silicon to be purified reach 900°C and the temperature of the free end of the aluminum-silicon melt reach 800°C, and after that keep the temperature constant in order that the purified silicon is segregated from the free end of the aluminum-silicon melt;
(3) As the purified silicon starts to segregate, move the heating apparatus in step with the growth rate of the segregated silicon in order to maintain the temperature at both ends of the aluminum-silicon melt;
(4) Upon the completion of dissolution of silicon to be purified, cool down to room temperature, take out the furnace charge after air pressure recovery, and cut off the purified silicon segregated.

The above mentioned method for the purification of silicon, wherein, the said aluminum-silicon alloy is prepared as follows:
Mix aluminum with the purity 4N or 5N and silicon with the purity 4N or 5N in the proportion of 26% by weight of silicon and 74% by weight of aluminum, melt the aluminum-silicon mixture under air pressure lower than 10⁻²Pa, stop heating immediately when aluminum and silicon is mixed smooth, and the aluminum-silicon alloy is obtained after cooling.

The above mentioned method for the purification of silicon, wherein, the said silicon to be purified is 80% to 120% of the said aluminum-silicon alloy by weight.

The above mentioned method for the purification of silicon, wherein, the interface temperatures of the aluminum-silicon melt and silicon to be purified further reach 1030°C and the temperature at the free end of the aluminum-silicon melt further reaches 930°C.

A method for removing impurities from silicon to be purified, characterized in that boron, phosphor and other impurities are concentrated altogether at the portion that condenses at last and removed using the difference of segregation temperature between silicon and impurities in the aluminum-silicon melt.

Select high-purity aluminum as proper solvent at the temperature lower than the melting point of silicon, dissolve silicon to be purified in the aluminum melt to form homogeneous system and therefore the aluminum-silicon melt is obtained. Silicon atoms are segregated again at certain temperature, at this moment, boron, phosphor and other impurities are still dissolved in the aluminum-silicon melt for purifying silicon.

The said high-purity aluminum has the purity 4N or 5N. The said silicon to be purified has the purity 4N or 5N.

The other method for the purification of silicon, comprising the following steps:
(1) Place aluminum with a purity 4N or 5N and silicon to be purified in the closed environment in close contact and vacuuming, start to heat when air pressure is lower than 10⁻²Pa, maintain the temperature constant when the temperatures of both aluminum and silicon reach 800°C, and dissolve a part of silicon in aluminum to form aluminum-silicon melt;
(2) Control the heating apparatus when the said part of silicon dissolves uniformly in aluminum, maintain the temperature at left side of aluminum-silicon melt to reach 800°C and increase the temperature of undissolved silicon, when the interface temperatures of the aluminum-silicon melt and silicon reach 900°C, the silicon solute starts to spread towards the right side of the aluminum-silicon melt and the purified silicon is segregated;
(3) As the purified silicon starts to segregate, move the heating apparatus in step with the growth rate of the segregated silicon in order to maintain the temperature at both ends of the aluminum-silicon melt;
(4) Upon the completion of dissolution of silicon to be purified, cool down to room temperature, take out the furnace charge after air pressure recovery, and cut off the purified silicon segregated.

The said method for the purification of silicon, wherein the said silicon to be purified and the said aluminum have a ratio of 106%-146%:74% by weight.

A method for the purification of silicon, characterized in comprising the following steps:
(1)Place silicon seed crystal, the aluminum-silicon alloy containing ≧38% by weight of silicon made from aluminum with the purity 4N or 5N and silicon with the purity 4N or 5N and silicon to be purified in the graphite boat from left to right, close tightly and vacuum, heat when air pressure is lower than 10⁻² Pa, and the aluminum-silicon alloy melts into the aluminum-silicon melt;
(2)Control the heating apparatus to make the interface temperature of the aluminum-silicon melt and silicon to be purified reach 1030 °C and the interface temperature of the aluminum-silicon and silicon seed crystal reach 930°C, keep the temperature constant, and the purified silicon is segregated from the aluminum-silicon melt along silicon seed crystal;
(3) After the segregation of the purified silicon, move the heating apparatus in step with the growth rate at which the purified silicon is segregated, and maintain the temperature at two ends of the aluminum-silicon melt;
(4) Upon the completion of dissolution of silicon to be purified, cool down to room temperature, take out the furnace charge after air pressure recovery, and cut off the purified silicon segregated.

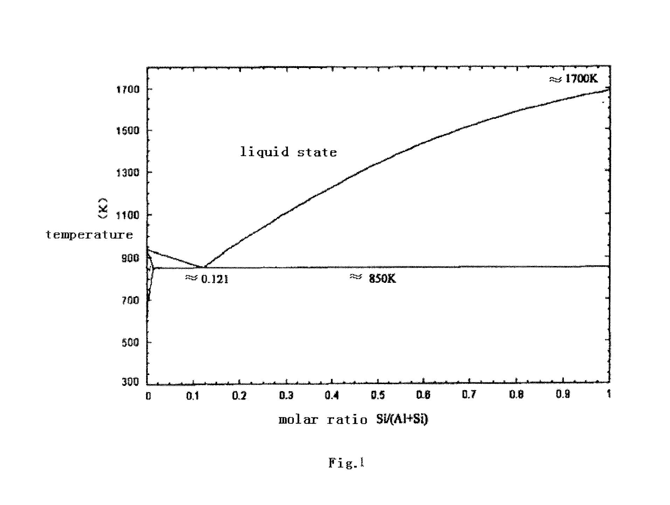

The favorable effects of the present invention are as follows:
As the aluminum with the purity 4N or 5N is selected as solvent and the quantity of the soluble impurities in the aluminum-silicon melt is large, the segregation quantity of pure silicon is guaranteed. The Al-Si binary phase diagram of fig.1 shows that the precipitation is the pure silicon containing no aluminum.

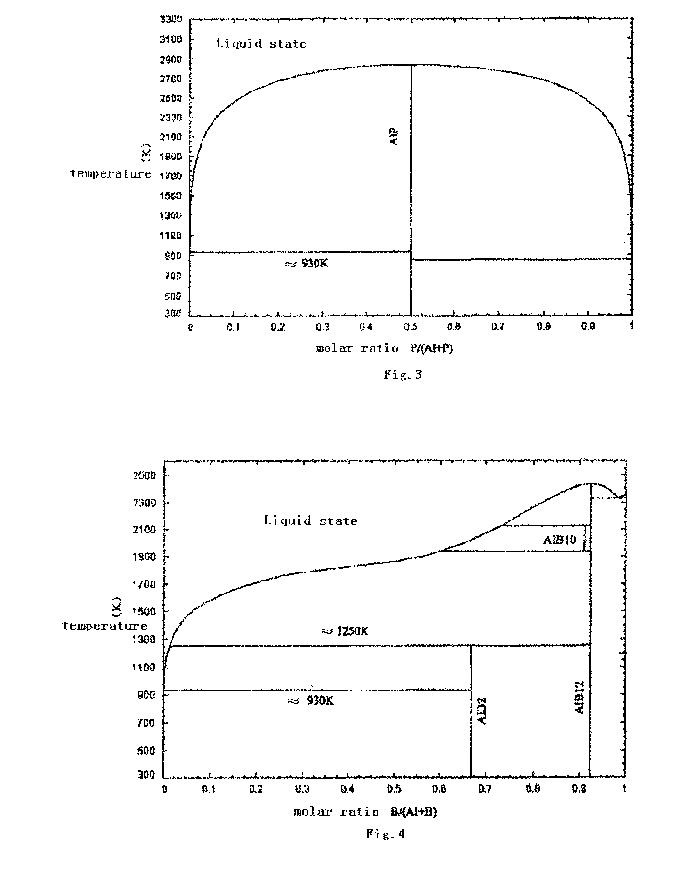

Fig.3 and fig.4 are the binary phase diagrams of Al-P and Al-B respectively. It can be seen that Al and the impurity P and B have bonding force and all produced compounds such as AlP and AlB₂. As the contents of phosphor and boron in aluminum are measured by ppm, the segregation temperature thereof is very close to 660 °C which is the melting point of aluminum and is far away from the temperature range of 800 °C-900°C of the silicon dissolved and segregated during the purification process of the present invention. The obvious difference between the segregation temperatures determines that the impurities in the silicon to be purified will remain in the aluminum-silicon melt and will be removed from silicon. As for other impurities, they also remain in the melt similarly because of the difference between segregation temperatures. According to the present invention, the difference between the segregation temperatures in the aluminum-silicon melt is used to make boron, phosphor and other impurities concentrate altogether at the portion that condenses at last and be removed.

According to the purification process of the present invention, boron, phosphor and other impurities in the silicon with the purity 4N or 5N can be removed at the same time. Therefore, the purity of silicon can be further increased and the requirements from solar cells for high-purity silicon can be more stably met.

### Brief Description of the Drawings

Fig.1 is Al-Si binary phase diagram.
Fig.2 is the schematic diagram of the device used in the method for the purification of silicon of the present invention, the operating status and temperature distribution.
Fig.3 is Al-P binary phase diagram.
Fig.4 is Al-B binary phase diagram.

### Detailed description of the preferred embodiments

The basic theory of the present invention is: selecting high-purity silicon (with the purity 4N or 5N) as the proper solvent, at the temperature far below the melting point of silicon, dissolving silicon to be purified with the purity 4N or 5N in the aluminum melt to form the homogeneous system. Silicon atoms are segregated at certain temperature, at this moment, boron, phosphor and other impurities are still dissolved in the aluminum-silicon melt for the purpose of purifying silicon.

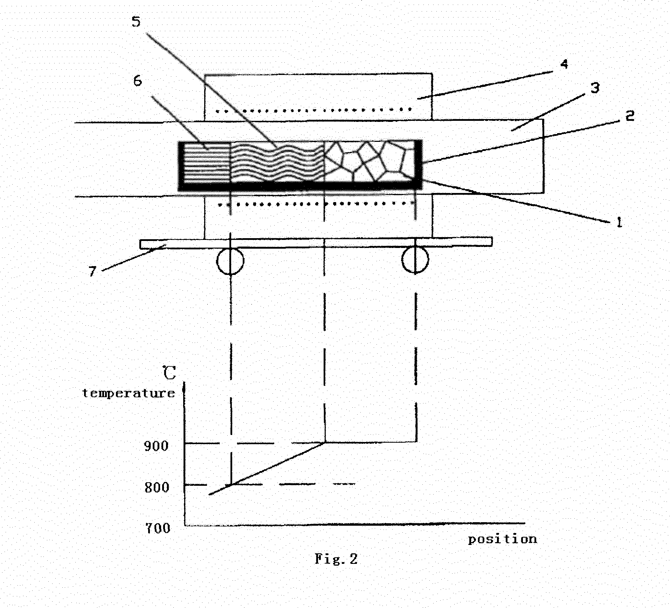

The Al-Si binary phase diagram of fig.1 shows that in the hypereutectic melt wherein the silicon content is over 12.1%, pure silicon is segregated when the temperature cools down to intersect with the liquidus curve that corresponds to a certain component. The purifying device as illustrated in fig.2 is designed based on this. Silicon to be purified 1(purity 4N or 5N) is placed on the right side of the graphite boat 2 with the purity 4N or higher) and the solid-liquid interface temperature between it and the aluminum-silicon melt 5 is controlled to remain 900°C. The temperature at the interface between the aluminum-silicon melt 5 and the segregated pure silicon 6 is controlled to remain 800°C. The graphite boat 2 is placed in the quartz tube 3 connected with the vacuum unit in vacuum atmosphere wherein the air pressure is below 10⁻²Pa. The quartz tube 3 is placed in the heating furnace 4 and the two ends of the aluminum-silicon melt is maintained to remain within the constant temperature ranges of 900°C and 800°C.

At the solid-liquid interface under 900°C, the silicon to be purified 1 is dissolved in the aluminum-silicon melt 5. The solid-liquid two-phase equilibrium appears when the concentration of silicon in the aluminum-silicon melt 5 rises to 37% at the solid-liquid interface. The silicon with high concentration on the right side spreads towards the left side of the aluminum-silicon melt 5 due to the low concentration of silicon in the aluminum-silicon melt located where the temperature is low. With the continuing dissolution of the silicon to be purified 1, the segregated pure silicon 6 appears from the left side, when the concentration of the silicon on the left side of the aluminum-silicon melt 5 increases to 28%. As the result of the dynamic balance dissolution-spread-segregation of the silicon to be purified, the quantity of the pure silicon segregated from the left side increases repeatedly, which results in the continuing rightward shift of the solid-liquid interface. Therefore, the heating furnace 4 is moved to the right side simultaneously with the aid of the furnace-moving device 7 (it can be the cart for moving the furnace) in order to the relative stability of the conditions of the said dynamic balance, and therefore the quality of the segregated silicon crystals can be guaranteed. Besides, under appropriated growth conditions, placing the silicon seed crystals on the left side of the graphite boat can help grow the square shaped monocrystalline silicon ingot whose shape and size are determined by the graphite container.

The purifying operation is stopped when the silicon to be purified on the right side of the aluminum-silicon melt dissolves completely in the melt. The temperature is cooled down at speed of about -2°C/min after being kept constant for 1 hour. Power is cut off when the temperature drops to 700-800°C. The vacuum system is opened after the temperature cools down to room temperature. The quartz tube 3 is opened, the graphite boat 2 is taken out, all the materials in the boat are poured out and the pure silicon 6 on the left side is cut off.

### Example1

The spread process of the silicon solute and the temperature distribution of the heating furnace are illustrated in the schematic diagram of fig.2. The steps for purifying silicon are as follows:
(1) Mix aluminum with the purity 4N or 5N with silicon with the purity 4N or 5N in proportion as silicon accounts for 26% of total aluminum by weight and melting the aluminum-silicon mixture in the graphite boat 2 under air pressure of 10⁻²Pa. The quartz tube 3 is taken out of the heating furnace 4 immediately after the components are uniformly mixed. The square shaped aluminum-silicon alloy ingot is obtained upon the cooling down of the materials. The aluminum-silicon alloy ingot is taken out after being cooled down to room temperature. The surface thereof is polished, rinsed and dried for later use. Besides, the high-purity silicon with the purity 4N or 5N is also prepared for later use by cleaning and drying its surface.
(2) Weigh silicon with the purity 4N or 5N in the proportion of 80% by weight of the aluminum-silicon alloy ingot containing 26% of silicon and place the aluminum-silicon alloy ingot and silicon to be purified in the graphite boat 2. The alloy ingot is placed on the left side of the graphite boat and the silicon to be purified is placed on the right side of the graphite boat (the size is not defined in order to fit in the graphite boat).
(3) Close the quartz tube 3 and start the vacuum system. Start to heat when air pressure is lower than 10⁻²Pa. with the increase of the temperature, the aluminum-silicon alloy ingot starts to melt. Continue to increase the temperature and maintain the temperature until the right side of the aluminum-silicon melt reaches 900°C and the left side reaches 800°C. The concentration of the solute silicon on the right side of the aluminum-silicon melt increases gradually to 37%. The solute silicon spread toward the left side due to the difference of concentration, and therefore the pure silicon is segregated from the interface of the left interface.
(4) Start the furnace-moving device 7 when the crystals of the pure silicon are segregated from the left side and move the heating furnace 4 in step with the growth rate of the segregated silicon.
(5) Observe through the quartz tube 3. Start to cool down when the silicon to be purified on the right side finishes dissolving, namely when growth stops.
(6) Stop the vacuum pump when the temperature cools down to room temperature, let air in the vacuum system, take out the graphite boat 2 when air pressure recovers, and pour out the materials in the furnace. The purified high-purity silicon on the left side is cut off and the rest of the materials are used to make industrial high-purity aluminum-silicon alloy.

### Example 2

(1) Prepare aluminum with the purity 4N or 5N and silicon with the purity 4N or 5N according to a ratio by weight of aluminum : silicon =74% : 146% and place both of them in the graphite boat 2 at the same time, wherein aluminum is on the left side and silicon is on the right side.
(2) Close the quartz tube 3 and starting the vacuum system. Start to heat when air pressure is lower than 10⁻²Pa. The heating furnace 4 controls the graphite boat 2 to be completely within 800°C range and maintains the temperature constant. When the dissolving concentration of silicon in aluminum becomes even, adjust the heating furnace to make the left side of the graphite boat maintain 800°C and increase the temperature of right side in the meantime. When the temperature of the solid-liquid interface between the undissolved silicon on the right side and the aluminum-silicon melt reaches 900°C, the solute silicon starts to spread from right to left till the left side of the graphite boat and the pure silicon is segregated.

Afterwards, operate according to the steps (4), (5) and (6) example 1 to obtain the purified high-purity silicon.

### Example 3

Conduct according to the device illustrated in fig.2. The steps included are as follows:
(1) Prepare aluminum with the purity 4N or 5N and silicon with the purity 4N or 5N for the aluminum-silicon alloy containing ≧ 38% by weight of silicon and place them in the high-purity graphite boat 2. Heat them to melt under the atmosphere of the air pressure being lower than 10⁻²Pa. Remove the quartz tube 3 out of the heating furnace 4 when the ingredients become even. The aluminum-silicon alloy ingot containing ≧ 38% of silicon with a square-shaped section is obtained after the materials cool down. Dry for later use after the surface thereof is polished and cleaned.
(2) The silicon seed crystals with a square-shaped section which match the inner wall of the graphite boat are placed at the position 6 on the left side of the high-purity graphite boat 2 where pure silicon is segregated, the aluminum-silicon alloy ingot prepared in the above mentioned steps is placed at the position 5 of the aluminum-silicon melt, and the silicon to be purified is placed at the position 1 of the silicon to be purified.
(3) Close the quartz tube 3 and start the vacuum system. Start to heat when air pressure is lower than10⁻²Pa. Lower the speed of increasing temperature when the interface temperature between the silicon to be purified 1 and the aluminum-silicon melt 5 rises to the point which is 50°C lower than the melting point of the said aluminum-silicon alloy. Observe carefully. The temperature control changes from manual control to automatic control when the aluminum-silicon alloy melts. Temperature increases slowly and slightly through automatic control. The temperature of the right side of the interface between the silicon to be purified and the aluminum-silicon melt reaches 1030°C, when the temperature of the left side of the interface between the seed crystals and the aluminum-silicon melt reaches 930°C. Starting from the point when the aluminum-silicon alloy start to melt, during the following processes of increasing and controlling temperature, the over-temperature call-back need to be prevented. Observe the left side of the interface between the seed crystals and the aluminum-silicon alloy. Start the furnace-moving device 7 to move the heating furnace 4 towards right side in step with the growth rate when the seed crystals start to grow stably.
(4)The high-purity silicon with a big grain structure and the high-purity monocrystalline silicon can be segregated along the interface of the seed crystals by operating stably according to the above-mentioned steps.
(5) Move to the right with the heating furnace. The silicon to be purified 1 continues to dissolve in the aluminum-silicon melt 5 and the length continues to become shorter. On the other hand, the length of the other end, namely the pure silicon ingot connected with the seed crystals continues to increase. Lower the temperature gradually after the silicon to be purified dissolves completely in the aluminum-silicon melt 5 (that is the length is zero).
(7) Stop the vacuum system when the temperature cools down to room temperature. Take out the graphite boat 2 after air is in and take out the materials. Cut off the high-purity silicon ingot containing silicon seed crystals on the left side. The remaining material is the aluminum-silicon hypereutectic high silicon alloy containing ≧ 38% of silicon.

## Claims

1. A method for the purification of silicon, **characterized in** comprising the steps of:
(1)Place the aluminum-silicon alloy made from aluminum with the purity 4N or 5N and silicon with the purity 4N or 5N and silicon to be purified in the closed environment in close contact and vacuum pumping, heat when air pressure is below 10⁻²Pa, and the aluminum-silicon alloy melts to form the aluminum-silicon melt;
(2)Control the heating apparatus to make the interface temperature of the aluminum-silicon melt and silicon to be purified reach 900°C and the temperature of the free end of the aluminum-silicon melt reach 800°C, and after that keep the temperature constant in order that the purified silicon is segregated from the free end of the aluminum-silicon melt;
(3) As the crystals of the purified silicon start to segregate, move the heating apparatus in step with the growth rate of the segregated silicon in order to maintain the temperature at both ends of the aluminum-silicon melt;
(4)Upon the completion of dissolution of silicon to be purified, cool down to room temperature, take out the furnace charge after air pressure recovery, and cut off the purified silicon segregated.

2. A method for the purification of silicon according to claim 1, wherein, the said aluminum-silicon alloy is prepared as follows: mix aluminum with the purity 4N or 5N and silicon with the purity 4N or 5N in the proportion of 26% by weight of silicon and 74% by weight of aluminum, melt the aluminum-silicon mixture under the air pressure lower than 10⁻²Pa, stop heating immediately when aluminum and silicon is mixed smooth, and the aluminum-silicon alloy is obtained after cooling.

3. A method for the purification of silicon according to claim 1 or 2, wherein, the said silicon to be purified is 80% to 120% of the said aluminum-silicon alloy by weight.

4. A method for the purification of silicon according to claim 1, wherein, the interface temperatures of the aluminum-silicon melt and silicon to be purified further reach 1030°C and the temperature at the free end of the aluminum-silicon melt further reaches 930°C.

5. A method for removing impurities from silicon to be purified, **characterized in that** boron, phosphor and other impurities are concentrated altogether at the portion that condenses at last and removed using the difference of segregation temperature between silicon and impurities in the aluminum-silicon melt.

6. A method for removing impurities from silicon to be purified according to claim 5, **characterized in** Selecting high-purity aluminum as proper solvent, at the temperature lower than the melting point of silicon, dissolve silicon to be purified in the aluminum melt to form homogeneous system to obtain the aluminum-silicon melt; silicon atoms are segregated again at certain temperature, at this moment, boron, phosphor and other impurities are still dissolved in the aluminum-silicon melt for purifying silicon.

7. A method for removing impurities from silicon to be purified according to claim 6, **characterized in that** the said high-purity aluminum has the purity 4N or 5N; the said silicon to be purified has the purity 4N or 5N.

8. A method for the purification of silicon, **characterized in** comprising the following steps:
(1)Place aluminum with a purity 4N or 5N and silicon to be purified in the closed environment in close contact and vacuuming, start to heat when air pressure is lower than 10⁻²Pa, maintain the temperature constant when the temperatures of both aluminum and silicon reach 800°C, and dissolve a part of silicon in aluminum to form aluminum-silicon melt;
(2)Control the heating apparatus when the said part of silicon dissolves uniformly in aluminum, maintain the temperature at left side of aluminum-silicon melt to reach 800°C and increase the temperature of undissolved silicon, when the interface temperatures of the aluminum-silicon melt and silicon reach 900°C, the silicon solute starts to spread towards the right side of the aluminum-silicon melt and the purified silicon is segregated;
(3) As the crystals of the purified silicon start to segregate, move the heating apparatus in step with the growth rate of the segregated silicon in order to maintain the temperature at both ends of the aluminum-silicon melt;
(4) Upon the completion of dissolution of silicon to be purified, cool down to room temperature, take out the furnace charge after air pressure recovery, and cut off the purified silicon segregated.

9. A method for the purification of silicon according to claim 4, wherein the said silicon to be purified and the said aluminum have a ratio of 106%-146%:74% by weight.

10. A method for the purification of silicon, **characterized in** comprising the following steps:
(1)Place silicon seed crystal, the aluminum-silicon alloy containing ≧ 38% by weight of silicon made from aluminum with the purity 4N or 5N and silicon with the purity 4N or 5N and silicon to be purified in the graphite boat from left to right, close tightly and vacuum, heat when air pressure is lower than 10⁻² Pa, and the aluminum-silicon alloy melts into the aluminum-silicon melt;
(2)Control the heating apparatus to make the interface temperature of the aluminum-silicon melt and silicon to be purified reach 1030 °C and the interface temperature of the aluminum-silicon and silicon seed crystal reach 930°C, keep the temperature constant, and the purified silicon is segregated from the aluminum-silicon melt along silicon seed crystal;
(3)After the segregation of the purified silicon, move the heating apparatus in step with the growth rate at which the purified silicon is segregated, and maintain the temperature at two ends of the aluminum-silicon melt;
(4)Upon the completion of dissolution of silicon to be purified, cool down to room temperature, take out the furnace charge after air pressure recovery, and cut off the purified silicon segregated.
